(19) Europäisches Patentamt
European Patent Office
Office européen des brevets

(11) **EP 4 004 951 B1**

(12) **EUROPÄISCHE PATENTSCHRIFT**

(45) Veröffentlichungstag und Bekanntmachung des Hinweises auf die Patenterteilung:
**14.02.2024 Patentblatt 2024/07**

(21) Anmeldenummer: **20751480.3**

(22) Anmeldetag: **24.07.2020**

(51) Internationale Patentklassifikation (IPC):
**C09J 7/38** (2018.01)     **C09J 109/02** (2006.01)
**C09J 115/00** (2006.01)    **H01B 13/012** (2006.01)

(52) Gemeinsame Patentklassifikation (CPC):
(C-Sets verfügbar)
**C09J 7/38; C09J 109/02; C09J 115/00;**
**H01B 13/01281;** C09J 2203/302; C09J 2400/263;
C09J 2409/00; C09J 2477/00          (Forts.)

(86) Internationale Anmeldenummer:
**PCT/EP2020/070941**

(87) Internationale Veröffentlichungsnummer:
**WO 2021/018766 (04.02.2021 Gazette 2021/05)**

(54) **VERFAHREN ZUM UMMANTELN VON LANGGESTRECKTEM GUT INSBESONDERE LEITUNGEN**

METHOD FOR JACKETING ELONGATE ARTICLES, IN PARTICULAR LINES

PROCÉDÉ DE CHEMISAGE D'ARTICLES ALLONGÉS, EN PARTICULIER DE LIGNES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.07.2019 DE 102019211178**

(43) Veröffentlichungstag der Anmeldung:
**01.06.2022 Patentblatt 2022/22**

(73) Patentinhaber: **tesa SE**
**22848 Norderstedt (DE)**

(72) Erfinder:
• **KLINGEBERG, Kerstin**
**22527 Hamburg (DE)**
• **SIMONIS, Heike**
**22299 Hamburg (DE)**
• **GULDBRANDSEN, Lars**
**22885 Barsbüttel (DE)**
• **SCHUEMANN, Uwe**
**25421 Pinneberg (DE)**

(74) Vertreter: **tesa SE**
**Hugo-Kirchberg-Straße 1**
**22848 Norderstedt (DE)**

(56) Entgegenhaltungen:
**EP-A1- 3 499 664        WO-A1-2015/004190**
**US-A1- 2015 013 874**

• **DATABASE WPI Week 201169 13. Oktober 2011 (2011-10-13) Thomson Scientific, London, GB; AN 2011-M72866 XP002800879, -& JP 2011 204496 A (DAINIPPON PRINTING CO LTD) 13. Oktober 2011 (2011-10-13)**

EP 4 004 951 B1

(52) Gemeinsame Patentklassifikation (CPC): (Forts.)

C-Sets
C09J 2409/00, C09J 2477/00

**Beschreibung**

Die Erfindung betrifft ein Verfahren zum Ummanteln von langgestrecktem Gut, insbesondere Kabelsätzen.

Seit geraumer Zeit werden in der Industrie Klebebänder zur Herstellung von Kabelbäumen verwendet. Die Klebebänder werden zum Bündeln einer Vielzahl von elektrischen Leitungen vor dem Einbau oder in bereits montiertem Zustand eingesetzt, um beispielsweise den Raumbedarf des Leitungsbündels durch Bandagieren zu reduzieren und zusätzlich Schutzfunktionen wie Schutz gegen mechanische und/oder thermische Beanspruchung zu erreichen. Gängige Formen von Klebebändern umfassen Folien- oder Textilträger, die in der Regel einseitig mit Haftklebemassen beschichtet sind. Klebebänder zum Ummanteln von langgestreckten Gütern sind beispielsweise aus der EP 1 848 006 A2, der DE 10 2013 213 726 A1, und der EP 2 497 805 A1 bekannt.

Derzeitige mit Klebeband umwickelte Kabelsätze sind in der Regel flexibel. Dies ist jedoch aus fertigungstechnischen Gründen oft unerwünscht. In der Fertigung werden die Kabelstränge in der Regel zu einem Kabelplan vorgefertigt und dann in das zu bestückende Objekt wie beispielsweise Automobile eingesetzt. Ein Kabelsatzplan entspricht der tatsächlichen räumlichen Anordnung der einzelnen Kabelstränge in dem Kabelsatz, also welcher Kabelstrang an welcher Stelle in welchem Winkel gebogen ist, wo sich Positionen von Abzweigen oder Ausbindungen befinden und mit welchen Steckern die Enden der Kabelstränge belegt sind.

Um die einzelnen Stränge des Kabelsatzes in einer bestimmten Form zu halten, so dass sie zum Beispiel im Motorraum um den Motor herumgeführt werden können, ohne mit dem Motor in Kontakt zu kommen, werden um den mit Klebeband umwickelten Kabelbaum üblicherweise nachträglich Spritzgussteile angebracht. Diese Spritzgussteile haben aber den Nachteil, dass ein zusätzlicher Material- und Montageaufwand anfällt.

In der WO 2015/004190 A1 wird ein Verfahren zum Ummanteln von langgestrecktem Gut wie insbesondere Leitungen oder Kabelsätzen offenbart, bei dem das langgestreckte Gut mit einem Klebeband mit darauf aufgebrachter aushärtbarer Klebemasse in einer Schraubenlinie oder in axialer Richtung umhüllt wird und die auf dem Klebeband aufgebrachte Klebemasse durch Zufuhr von Strahlungsenergie wie Wärme ausgehärtet wird. Zur thermischen Aushärtung wird dabei eine Temperatur von 175°C angewendet.

Nachteilig bei diesem Verfahren ist die hohe Aushärtungstemperatur, die bei der Montage von Kabelsträngen während des Fertigungsprozesses beispielsweise in der Automobilindustrie wenig praktikabel ist, insbesondere weil die oft aus PVC gefertigten Kabelisolierungen beschädigt werden können. Folglich werden bislang Kabelpläne in vorgefertigten Spritzgussformen verlegt. Dies ist mit hohem Fertigungsaufwand verbunden.

Daher sind Klebebänder wünschenswert, deren Klebemassen bei höchstens 110 °C, bevorzugt höchstens 100 °C, weiter bevorzugt zwischen 60 °C und 100 °C aushärten, damit die Umhüllung von Klebebändern in den Fertigungsprozessen der Kabelbäume beziehungsweise Kabelpläne integriert werden kann.

Die Klebebänder sollen innerhalb der Prozessvorgaben zur Weiterverarbeitung, zum Beispiel innerhalb von 6 Minuten, aushärten und nach dem Aushärten die geforderten Anforderungen an Formstabilität aufweisen. Andererseits dürfen die Klebemassen nicht schon bei der Lagerung aushärten, da sie ansonsten nicht mehr verwendbar sind.

Aus der US 2019/0228885 A1 ist Verfahren zum Bilden eines starren Kabelbaums bekannt umfassend das Bereitstellen einer härtbaren Hülse, umfassend eine härtbare Verbindung, einen Klebstoff und eine Unterlage. Die härtbare Verbindung umfasst ein Polymer, das eine kontinuierliche Phase bildet, und ein reaktives Harz, das im ungehärteten Zustand der härtbaren Verbindung eine diskontinuierliche Phase bildet. Die härtbare Verbindung umfasst ferner mindestens einen Härter, einen Initiator oder einen Beschleuniger. Zur Bildung des starren Kabelbaums werden mehrere Kabel in Längsrichtung auf der Hülse platziert, die härtbare Hülse um die platzierte Vielzahl von Kabeln gewickelt, um einen Kabelbaum zu bilden, der Kabelbaums in eine gewünschte Form platziert wird und die härtbare Verbindung ausgehärtet wird.

Die JP 2011 204 496 A offenbart ein Klebeband mit einer aushärtbaren Klebeschicht, die Acrylharz, Epoxidharz und ein Härtungsmittel enthält.

Ein Verfahren zur Herstellung eines starren Kabelbaums ist ebenfalls aus der EP 3 499 664 A1 bekannt, in der auch ein Klebeband mit einer aushärtbaren Klebemassenschicht beschrieben ist.

Die US 2015/0013874 A beschreibt ein Verfahren zum Ummanteln von langgestrecktem Gut wie insbesondere Leitungen oder Kabelsätzen, wobei ein Klebeband umfassend einen textilen Träger und eine auf mindestens einer Seite des Trägers aufgebrachte aushärtbare Klebemasse in einer Schraubenlinie um das langgestreckte Gut geführt wird oder das langgestreckte Gut in axialer Richtung von dem Klebeband umhüllt wird, das langgestreckte Gut mitsamt dem umhüllenden Klebeband in die gewünschte Anordnung, insbesondere in den Kabelsatzplan gebracht wird, das langgestreckte Gut in dieser Anordnung gehalten wird, die aushärtbare Klebemasse durch Zufuhr von Strahlungsenergie wie Wärme zum Aushärten gebracht wird.

Aufgabe der vorliegenden Erfindung ist es daher, ein Verfahren zum Ummanteln von langgestrecktem Gut unter Verwendung eines rigiden Klebebands zur Verfügung zu stellen, das die oben beschriebenen Anforderungen erfüllt. Aufgabe der vorliegenden Erfindung ist es auch ein mit dem Verfahren erhältliches Produkt zur Verfügung zu stellen.

Zur Lösung des technischen Problems wird ein Verfahren zum Ummanteln von langgestrecktem Gut vorgeschlagen, umfassend einen bandförmigen Träger, der auf mindestens einer Seite mit einer bevorzugt selbstklebenden Klebeschicht versehen ist, die insbesondere bei einer Temperatur von bis zu 110 °C thermisch aushärtbar ist.

Gelöst wird diese Aufgabe durch ein Verfahren zum Ummanteln von langgestrecktem Gut wie insbesondere Leitungen oder Kabelsätzen, mit einem Klebeband umfassend einen bandförmigen Träger, der auf mindestens einer Seite mit einer thermisch härtbaren, schmelzbaren, vorzugsweise haftklebrigen Klebeschicht versehen ist, wobei die Klebeschicht ein epoxidfunktionalisiertes Acrylnitril/Butadien-Copolymer mit durchschnittlich mehr als 1,5 Epoxidgruppen pro Molekül und das vorzugsweise gemahlene Reaktionsprodukt aus Phthalsäureanhydrid und Diethylentriamin umfasst, wobei das Klebeband in einer Schraubenlinie um das langgestreckte Gut geführt wird oder das langgestreckte Gut in axialer Richtung von dem Klebeband umhüllt wird, das langgestreckte Gut mitsamt dem umhüllenden Klebeband in die gewünschte Anordnung, insbesondere in den Kabelsatzplan gebracht wird, das langgestreckte Gut in dieser Anordnung gehalten wird, die aushärtbare Klebemasse durch die Zufuhr von thermischer Energie bei einer Temperatur zwischen 60 °C und 230 °C, insbesondere bei einer Temperatur von bis zu 110 °C zum Aushärten gebracht wird.

Die vorliegende Erfindung betrifft insbesondere einen thermisch härtbaren Klebstoff, der bei Raumtemperatur eine feste oder zumindest sehr hochviskose Konsistenz hat und vorzugsweise haftklebrig ist, in einem Temperaturbereich zwischen ungefähr 40 °C und 60 °C als Schmelze in einem Compoundier- und Extrusionsprozess verarbeitet werden kann und thermisch bei einer Temperatur von bis zu 110 °C, aber auch in einem Temperaturbereich zwischen 110 °C und 230 °C aushärtet. Die so erzielte Aushärtung beinhaltet eine chemische Vernetzung, so dass der Klebstoff nach der Aushärtung nicht mehr schmelzbar ist.

Unter einem epoxidfunktionalisierten Acrylnitril/Butadien-Copolymer mit durchschnittlich mehr als 1,5 Epoxidgruppen pro Molekül wird in dieser Schrift ein Copolymer aus Acrylnitril und Butadien verstanden, an das die entsprechende Anzahl an Epoxidgruppen chemisch angeknüpft ist. Vorzugsweise sind zwei Epoxidgruppen pro Molekül chemisch angeknüpft. Die chemische Anknüpfung erfolgt im Allgemeinen in der Weise, dass von einem Carboxyl-funktionalisiertem, meist Carboxyl-terminierten Copolymer aus Acrylnitril und Butadien (CAS-Nummer: 68891-46-3) ausgegangen wird, das entweder mit einem Diepoxid, zum Beispiel mit Bisphenol-A-diglycidylether (DGEBA) oder mit Bisphenol-F-diglycidylether (DGEBF) oder mit einem Bisphenol-A-Epichlorhydrinharz mit durchschnittlicher Molmasse ≤700 g/mol (CAS-Nummer: 25068-38-6) oder mit einem Bisphenol-F-Epichlorhydrinharz (CAS-Nummer: 9003-36-5) oder mit Epichlorhydrin umgesetzt wird. Carboxyl-terminierte Copolymere aus Acrylnitril und Butadien sind unter dem Handelsnamen Hypro® und der Endung CTBN von der Firma CVC/ Emerald Performance Materials kommerziell erhältlich. Die daraus hergestellten epoxidfunktionalisierten Acrylnitril/Butadien-Copolymere sind von der gleichen Firma ebenfalls unter dem Handelsnamen Hypro®-erhältlich und tragen die Endung ETBN. Sie sind weiterhin von der Firma Schill+Seilacher unter dem Handelsnamen Struktol®-Polydis erhältlich. Dort sind unter dem gleichen Handelsnamen auch die besonders vorteilhaften, mit Bisphenol A und Bisphenol F kettenverlängerten Typen erhältlich sowie die ebenfalls verwendbaren epoxidfunktionalisierten, vorvernetzten Nitrilkautschuke.

Das Reaktionsprodukt aus Phthalsäureanhydrid und Diethylentriamin hat die CAS-Nummer: 68003-28-1. Es ist in gemahlener Form unter dem Handelsnamen ARADUR® 9506 von der Firma Huntsman erhältlich. Der freie Diethylentriamingehalt liegt vorteilhaft und gemäß der Spezifikation von ARADUR® 9506 zwischen einschließlich 1,0 und 5,0 Gewichtsprozent. Die Korngröße ist vorteilhaft (und auch gemäß der Spezifikation von ARADUR® 9506) zu mindestens 95 Gewichtsprozent im Durchmesser kleiner oder gleich 70 $\mu$m (ermittelt mittels statischer Laser-Lichtstreuung (Laser diffraction technique, ISO 13320:2009; da die Ausschlussgrenze bei 70 $\mu$m liegt, ist eine Spezifizierung nach Mie- oder Fraunhofer-Therie nicht erforderlich).

Mahlen umfasst in dieser Schrift wie üblich die allgemeine Zerkleinerung von stückigem Material zu einem fein- oder feinstkörnigen Endprodukt.

Das epoxidfunktionalisierte Acrylnitril/Butadien-Copolymer mit durchschnittlich mehr als 1,5 Epoxidgruppen pro Molekül und das vorzugsweise gemahlene Reaktionsprodukt aus Phthalsäureanhydrid und Diethylentriamin liegen in dem Klebstoff vorteilhaft in einem definierten Verhältnis vor. Dieses definierte Verhältnis ist so gewählt, dass die Anzahl der NH-Bindungen des vorzugsweise gemahlenen Reaktionsprodukts aus Phthalsäureanhydrid und Diethylentriamin zur Gesamtanzahl der Epoxidgruppen zwischen einschließlich 0,1 und 1,5, bevorzugt zwischen einschließlich 0,3 und 1,2, besonders bevorzugt zwischen 0,5 und 0,9 beträgt, wobei zur Berechnung dieser Verhältnisse für das Reaktionsprodukt aus Phthalsäureanhydrid und Diethylentriamin von einem theoretischen

Äquivalentgewicht von 77,7 g pro Mol NH-Bindungen ausgegangen wird.

Ein schmelzbarer Klebstoff im Sinne dieser Schrift hat eine mit einem Rheometer im Oszillationsversuch bei einer sinusförmig oszillierenden Scherbeanspruchung in einer Platte-Platte-Anordnung, einer Temperatur von 23 °C und einer Oszillationsfrequenz von 10,0 rad/s gemessene komplexe Viskosität von mindestens 1.000 Pas, vorzugsweise mindestens 2.000 Pas, idealerweise mindestens 3.000 Pas. Bei Temperaturen im Bereich zwischen 40 °C und 60 °C und einer Oszillationsfrequenz von 10,0 rad/s verringert sich die komplexe Viskosität bis auf weniger als 500 Pas, vorzugsweise bis auf weniger als 200 Pas, idealerweise bis auf weniger als 100 Pas. Die Oszillationsfrequenz entspricht der Winkelfrequenz.

Die komplexe Viskosität η* ist folgendermaßen definiert:

$$\eta* = G* / \omega$$

(G* = komplexer Schubmodul, ω = Winkelfrequenz).
Die weiteren Definitionen lauten:

$$G* = \sqrt{(G')^2 + (G'')^2}$$

(G" = Viskositätsmodul (Verlustmodul),
G' = Elastizitätsmodul (Speichermodul)).

$$G'' = \tau/\gamma \bullet \sin(\delta)$$

(τ = Schubspannung, γ = Deformation, δ = Phasenwinkel = Phasenverschiebung zwischen Schubspannungs- und Deformationsvektor).

$$G' = \tau/\gamma \bullet \cos(\delta)$$

(τ = Schubspannung, γ = Deformation, δ = Phasenwinkel = Phasenverschiebung zwischen Schubspannungs- und Deformationsvektor).

$$\omega = 2\pi \bullet f$$

(f = Frequenz).

Haftklebrigkeit ist die Eigenschaft eines Stoffes, bereits unter relativ schwachem Andruck eine dauerhafte Verbindung zu einem Haftgrund einzugehen. Stoffe, die diese Eigenschaft besitzen, werden als Haftklebstoffe bezeichnet. Haftklebstoffe sind seit langem bekannt. Häufig können sie nach Gebrauch im Wesentlichen rückstandsfrei vom Haftgrund wieder abgelöst werden. Haftklebstoffe sind in der Regel bei Raumtemperatur permanent eigenklebrig, weisen also eine gewisse Viskosität und Anfassklebrigkeit auf, so dass sie die Oberfläche des jeweiligen Haftgrunds bereits bei geringem Andruck benetzen. Die Fähigkeit eines Haftklebstoffs, auf Werkstoffen zu haften und Kräfte zu übertragen, beruht auf dem Adhäsionsvermögen und der Kohäsion des Haftklebstoffs.
Haftklebstoffe können als extrem hochviskose Flüssigkeiten mit einem elastischen Anteil betrachtet werden. Haftklebstoffe haben demzufolge besondere, charakteristische viskoelastische Eigenschaften, die zu der dauerhaften Eigenklebrigkeit und Klebfähigkeit führen.
Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des jeweiligen Haftklebstoffs als auch von der Geschwindigkeit und Dauer der Deformation sowie von der Temperatur.
Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Anfließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.
Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.
Zur genaueren Beschreibung und Quantifizierung des Maßes an elastischem und viskosem Anteil sowie des Verhältnisses der Anteile zueinander können die mittels Dynamisch Mechanischer Analyse (DMA) ermittelbaren Größen Speichermodul (G') und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in Form einer planparallelen Schicht in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel $\delta$ bezeichnet.

Ein Stoff und die daraus hergestellte Schicht gelten im Allgemeinen als haftklebrig und werden im Sinne dieser Schrift als haftklebrig definiert, wenn bei Raumtemperatur, hier definitionsgemäß bei 23 °C, im Deformationsfrequenzbereich von $10^0$ bis $10^1$ rad/sec, G' zumindest zum Teil im Bereich von $10^3$ bis $10^7$ Pa liegt und wenn G" ebenfalls zumindest zum Teil in diesem Bereich liegt. Zum Teil heißt, dass zumindest ein Abschnitt der G'-Kurve innerhalb des Fensters liegt, das durch den Deformationsfrequenzbereich von einschließlich 10° bis einschließlich $10^1$ rad/sec (Abszisse) sowie den Bereich der G'-Werte von einschließlich $10^3$ bis einschließlich $10^7$ Pa (Ordinate) aufgespannt wird, und wenn zumindest ein Abschnitt der G"-Kurve ebenfalls innerhalb dieses Fensters liegt.

Innerhalb dieses Bereiches, den man in einer Matrix-Auftragung aus G' und G" (G' aufgetragen in Abhängigkeit von G") auch als viskoelastisches Fenster für Haftklebeanwendungen oder als Haftklebstofffenster nach viskoelastischen Kriterien bezeichnen kann, gibt es wiederum unterschiedliche Sektoren und Quadranten, die die zu erwartenden Haftklebeeigenschaften der jeweils zugehörigen Stoffe näher charakterisieren. Stoffe mit hohem G" und niedrigem G' innerhalb dieses Fensters zeichnen sich beispielsweise im Allgemeinen durch eine hohe Klebkraft und eine geringe Scherfestigkeit aus, während sich Stoffe mit hohem G" und hohem G' sowohl durch eine hohe Klebkraft als auch durch eine hohe Scherfestigkeit auszeichnen.

Generell sind die Erkenntnisse über die Zusammenhänge zwischen Rheologie und Haftklebrigkeit Stand der Technik und beispielsweise in "Satas, Handbook of Pressure Sensitive Adhesive Technology, Third Edition, (1999), Seiten 153 bis 203" beschrieben.

Als Füllstoffe, die optional ebenfalls enthalten sein können, können sowohl verstärkende wie zum Beispiel Ruß, als auch nicht verstärkende wie zum Beispiel Carbonate, insbesondere Kreide oder Sulfate wie zum Bespiel Bariumsulfat, eingesetzt werden. Weitere Beispiele für in Frage kommende Füllstoffe sind Silikate wie etwa Talkum, Kaolin, calciniertes oder teilcalciniertes Kaolin, Wollastonite oder Glimmer, Hydroxide oder Oxide wie etwa Quarzmehl, Aluminiumhydroxid, Zinkoxid oder Calciumoxid. Auch Mikrokugeln kommen als Füllstoffe in Frage. Mikrokugeln können Mikrovollglaskugeln, Mikrohohlglaskugeln und/oder Mikrokunststoffkugeln aller Art sein. Die Mikrokunststoffkugeln können vorexpandiert sein oder unexpandiert vorliegen. Die Partikelgröße im expandierten Zuustand liegt meist im Bereich zwischen 20 und 150 $\mu$m. Auch Mischungen der genannten Stoffe können eingesetzt werden. Die in Frage kommenden Rußarten unterliegen keiner Einschränkung. Zu nennen sind zum Beispiel Gasruß, Furnace-Ruß, Flammruß, Spaltruß, Acetylenruß, alle Arten von Füllstoffruß, Farbruß sowie Leitfähigkeitsruß.

Als Farbpigmente kommen grundsätzlich alle organischen und anorganischen Arten in Frage.

Optional kann der thermisch härtbare, schmelzbare, vorzugsweise haftklebrige Klebstoff auch Klebrigmacherharze enthalten. Unter der Bezeichnung "Klebrigmacherharz", englisch "Tackifier Resins", versteht der Fachmann einen Stoff auf Harzbasis, der die Klebrigkeit erhöht. Klebrigmacherharze lassen sich einteilen in Naturharze und synthetische Harze.

Typische Naturharze sind auf Kolophonium basierende Harze und ihre Derivate. Kolophoniumharze schließen zum Beispiel natürliches Kolophonium, polymerisiertes Kolophonium, teilweise hydriertes Kolophonium, vollständig hydriertes Kolophonium, veresterte Produkte dieser Kolophoniumarten (wie Glycerinester, Pentaerythritester, Ethylenglycolester und Methylester) und Kolophoniumderivate (wie Disproportionierungs-Kolophonium, mit Fumarsäure modifiziertes Kolophonium und mit Kalk modifiziertes Kolophonium) ein.

Typische synthetische Harze sind Polyterpenharze, wobei die Rohstoffe hier allerdings natürlichen Quellen entstammen, Kohlenwasserstoffharze und Terpenphenolharze. Es handelt sich sich dabei um Polymere mit niedrigem Molekulargewicht. Das gewichtsgemittelte, mittlere Molekulargewicht beträgt in der Regel kleiner 25.000 g/mol.

Polyterpenharze basieren auf $\alpha$-Pinen und/oder $\beta$-Pinen und/oder $\delta$-Limonen. Diese können hydriert, nicht hydriert oder teilhydriert sein.

Rohstoffe für die meisten Kohlenwasserstoffharze sind Nebenprodukte, die bei der Crackung von Naphtha oder Gasöl anfallen. Kohlenwasserstoffharze können danach klassifiziert werden, ob sie auf in erster Linie aromatischen, aliphatischen oder Dien-Monomeren basieren. Aromatische werden oft als C-9-Harze, aliphatische als C-5-Harze und Dien-Harze als $(C-5)_2$-Harze bezeichnet. Gemischte aromatisch-aliphatische Kohlenwasserstoffharze ((C-5/C-9)-Harze) sind ebenfalls vom Erfindungsgedanken eingeschlossen. Auch Kohlenwasserstoffharze können hydriert, nicht hydriert oder teilhydriert sein.

Vom Erfindungsgedanken eingeschlossen sind weiterhin Monomerharze vom Typ Styrol / $\alpha$-Methylstyrol (CAS-Nr.: 9011-11-4). Terpenphenolharze sind nach DIN 16916-1 1981-06 und ISO/TR 8244:1988 Harze, die durch Säurekatalysierte Addition von Phenolen an Terpene oder Kolophonium hergestellt werden.

Optional kann der thermisch härtbare, schmelzbare, vorzugsweise haftklebrige Klebstoff weiterhin Bitumen enthalten. Bitumen ist ein dunkelfarbiges, halbfestes bis springhartes, hochmolekulares Kohlenwasserstoffgemisch, das bei der Destillation geeigneten Erdöls als Rückstand anfällt und noch chemisch gebundenen Schwefel, Sauerstoff, Stickstoff und einige Spuren von Metallen enthält. Physikalisch gesehen gehört Bitumen zu den thermoplastischen Stoffen, das heißt seine Eigenschaften sind temperaturabhängig. Bei Abkühlung wird es spröde, bei Erwärmung durchläuft es stufenlos alle Zustände von fest über zähflüssig bis dünnflüssig. Man unterscheidet unter anderem folgende Bitumenarten und abgeleitete Produkte: Straßenbaubitumen, insbesondere Weichbitumen, modifiziertes Bitumen, insbesondere polymermodifiziertes Bitumen, Industrie-Bitumen, insbesondere Oxidationsbitumen beziehungsweise Hartbitumen, Flux-Bitumen und Bitumenemulsion.

Erfindungsgemäß bevorzugt ist Straßenbaubitumen. Besonders bevorzugt ist die Sorte 50/70, wobei die Zahlen die minimale und maximale Penetration bei 25 °C in der Einheit mm/10 nach DIN EN 1426 angeben. Vorteilhafte Bitumen-Konzentrationen in dem thermisch vulkanisierbaren, schmelzbaren, vorzugsweise haftklebrigen Klebstoff liegen zwischen einschließlich 1,0 Gew.-% und einschließlich 30,0 Gew.-%. Besonders vorteilhaft sind Konzentrationen zwischen einschließlich 5,0 Gew.-% und einschließlich 20,0 Gew.-%. Durch den Zusatz von Bitumen kann die Ölaufnahme verbessert werden, wenn auf geölten Blechen geklebt wird.

Optional kann der thermisch härtbare, schmelzbare, vorzugsweise haftklebrige Klebstoff außerdem Weichmacher enthalten. Weichmacher sind flüssige oder feste, indifferente organische Substanzen mit geringem Dampfdruck, überwiegend solche esterartiger Natur, welche ohne chemische Reaktion, vorzugsweise durch ihr Löse- und Quellvermögen, unter Umständen aber auch ohne ein solches, mit hochpolymeren Stoffen in physikalische Wechselwirkung treten und ein homogenes System mit diesen bilden können. Die Kurzbezeichnungen von Weichmachern sind in der DIN EN ISO 1043-3: 2000-01 geregelt. Die wichtigsten Weichmacher lassen sich in größere Gruppen einteilen, die im Folgenden aufgeführt sind, wobei in Klammern die Kurzzeichen nach DIN EN ISO 1043-3: 2000-01 stehen.

Phthalsäureester, auch kurz Phthalate genannt, umfassen unter anderem Dioctylphthalat (DOP; Di(2-ethylhexyl)phthalat), Diisononylphthalat (DINP), Diisodecylphthalat (DIDP) Phthalsäureester mit überwiegend linearen $C_6$- bis $C_{11}$-Alkoholen, Dibutylphthalat (DBP), Diisobutylphthalat (DIBP), Dicyclohexylphthalat (DCHP), Dimethylphthalat (DMP) und Diethylphthalat (DEP) sowie Mischester aus Benzyl(butyl)- (BBP), Butyl(octyl)-, Butyl(decyl)- und Dipentylphthalat, Bis(2-methoxyethyl)phthalat und Dicaprylphthalat (DCP).

Ein Beispiel für Trimellit(h)säureester mit (überwiegend) linearen $C_6$- bis $C_{11}$-Alkoholen ist Tris(2-ethylhexyl)trimellitat (TOTM).

Acyclische aliphatische Dicarbonsäureester sind zum Beispiel Ester der Adipinsäure wie Bis(2-ethylhexyl)adipat (Dioctyladipat, DOA), Bis(8-methylnonyl)adipat (Diisodecyladipat, DIDA), Dibutyldecandioat (Dibutylsebacat, DBS), Bis(2-ethylhexyl)decandioat (Dioctylsebacat, DOS; Ein Beispiel für einen cyclischen aliphatischen Dicarbonsäureester ist 1,2-Cyclohexandicarbonsäurediisononylester (DINCH).

Beispiele für Polymerweichmacher sind Polyester aus Adipin-, Decandi-, Nonandi- und Phthalsäure mit Diolen wie Butan-1,3-diol, Propan-1,2-diol, Butan-1,4-diol, Hexan-1,6-diol und anderen ($M_r$ ca. 1800-13000 g/mol).

Phosphorsäureester, kurz Phosphate genannt, sind eine weitere Gruppe. Beispielhaft zu nennen wären hier Trikresylphosphat (TCF), Triphenylphosphat (TPP), Diphenylkresylphosphat (DPCF), (2-Ethylhexyl)diphenylphosphat (Diphenyloctylphosphat, DPOF) , Tris(2-ethylhexyl)phosphat (TOF) und Tris(2-butoxyethyl)phosphat.

Butyloleat oder Butylstearat sind Beispiele für Fettsäureester, die eine weitere Gruppe darstellen. Weitere Beispiele für diese Gruppe sind Methyl- und Butylester der acetylierten Ricinolfettsäure und Fettsäureglycolester sowie Triethylenglycol-bis(2-ethylbutyrat).

Citronensäureester sind Beispiele für die Gruppe der Hydroxycarbonsäureester. Weitere Beispiele sind Weinsäureester und Milchsäureester.

Eine weitere Gruppe von Weichmachern sind Epoxyweichmacher, zum Beispiel epoxidierte Fettsäure-Derivate, insbesondere Triacylglycerole und Monoester. Auch einige der zuvor genannten Epoxidharze lassen sich in die Gruppe der Weichmacher einordnen. Weiterhin zu nennen wären noch Polyamidweichmache, zum Beispiel Benzolsulfonamide oder Methylbenzolsulfonamide. Eine weitere Gruppe von Weichmachern sind Alkylsulfonsäureester des Phenols (ASE). Auch Mineralöle sind im Sinne dieser Schrift als Weichmacher zu betrachten. Bevorzugt sind naphthenische Mineralöle. Auch das bereits separat aufgeführte Bitumen ließe sich in die Rubrik der Weichmacher einordnen.

In einer optionalen Ausführungsform enthält der thermisch härtbare, schmelzbare, vorzugsweise haftklebrige Klebstoff weitere Hilfs- und Zusatzstoffe wie zum Beispiel rheologische Additive, Alterungsschutzmittel (Antioxidantien), Lichtschutzmittel oder UV-Absorber. Beispiele für rheologische Additive sind pyrogene, hydrophobierte oder nicht hydrophobierte Kieselsäuren, Schichtsilikate (Bentonite), hochmolekulare Polyamidpulver oder Rizinusölderivat-Pulver. Die genannten rheologischen Additive können auch in die Rubrik der Füllstoffe eingeordnet werden. Zu den geeigneten Antioxidantien zählen zum Beispiel sterisch gehinderte Phenole, Hydrochinon-Derivate, Amine, organische Schwefelverbindungen oder organische Phosphorverbindungen.

Als Lichtschutzmittel finden zum Beispiel die bei Gaechter und Müller, Taschenbuch der Kunststoff-Additive, München 1979, bei Kirk-Othmer (3.) 23, 615 bis 627, bei Encycl. Polym. Sci. Technol. 14, 125 bis 148 und bei Ullmann (4.) 8, 21; 15, 529, 676 offenbaren Verbindungen Verwendung.

Der allgemeine Ausdruck "Klebeband" umfasst ein Trägermaterial, welches ein- oder beidseitig jeweils zumindest teilweise mit einem Klebstoff versehen ist. Das Trägermaterial umfasst alle flächigen Gebilde, beispielsweise in zwei Dimensionen ausgedehnte Abschnitte, Bänder mit ausgedehnter Länge und begrenzter Breite, Bandabschnitte, Stanzlinge (beispielsweise in Form von Umrandungen oder Begrenzungen einer zu klebenden Anordnung), andere Formkörper, Mehrschichtanordnungen und dergleichen.

Für bestimmte Anwendungen kann es gewünscht sein, dass eine Seite oder beide Seiten des Klebebandes nicht vollständig mit Klebstoff versehen ist beziehungsweise sind, sondern teilweise klebstofffreie Bereiche vorgesehen sind.

Gemäß einer Ausführungsform der Erfindung handelt es sich bei dem langgestreckten Gut um einen Kabelstrang, der ein Bündel aus mehreren Kabeln wie 3 bis 1000 Kabeln, bevorzugt 10 bis 500 Kabeln, insbesondere zwischen 50 und 300 Kabeln umfasst.

Die in der vorliegenden Erfindung eingesetzte thermisch härtbare Klebeschicht, die bei Raumtemperatur eine feste oder zumindest sehr hochviskose Konsistenz hat und vorzugsweise haftklebrig ist, kann in einem Temperaturbereich zwischen ungefähr 40 °C und 60 °C als Schmelze in einem Compoundier- und Extrusionsprozess verarbeitet werden und thermisch in einem Temperaturbereich zwischen 110 °C und 230 °C aushärten. Die so erzielte Aushärtung beinhaltet eine chemische Vernetzung, so dass der Klebstoff nach der Aushärtung nicht mehr schmelzbar ist.

Gemäß einer weiteren Ausführungsform ist die Klebeschicht bei einer Temperatur von 60 °C bis 110 °C, vorzugsweise von 60 °C bis 100 °C thermisch härtbar.

Die Herstellung einer thermisch härtbaren, schmelzbaren, vorzugsweise haftklebrigen Klebebandschicht erfolgt vorzugsweise in einem lösemittelfreien, kontinuierlichen Compoundier- und Beschichtungsprozess. Die Zudosierung des vorzugsweise gemahlenen Reaktionsproduktes aus Phthalsäureanhydrid und Diethylentriamin und der weiteren, optionalen, bekannten Formulierungsbestandteile wie zum Beispiel Füllstoffe, Ruß, Farbpigmente, Mikrokugeln, rheologische Additive, Weichmacher, Klebrigmacherharze, Bitumen, Alterungsschutzmittel, Lichtschutzmittel, UV-Absorber sowie sonstige Hilfs- und Zusatzstoffe erfolgt bevorzugt während des kontinuierlichen Compoundierprozesses in das kontinuierlich arbeitende Mischaggregat, insbesondere den Compoundierextruder. Der thermisch härtbare, schmelzbare, vorzugsweise haftklebrige Klebstoff sowie daraus hergestellte Haftklebebänder zeigen eine hervorragende Kombination von Produkteigenschaften, die auch für den Fachmann derartig nicht vorherzusehen waren.

Der Klebstoff beziehungsweise das daraus hergestellte Klebeband härten überraschenderweise bereits bei einer Temperatur von 110 °C binnen ungefähr 15 bis 20 Minuten zu hoher Festigkeit aus. Bei 180 °C beträgt die Aushärtezeit ungefähr 5 Minuten. Im Zugscherversuch in Anlehnung an DIN EN 1465 werden Zugscherfestigkeiten von ungefähr 10 bis 25 MPa erzielt, abhängig unter anderem von der Aushärtetemperatur, der Aushärtezeit und von der genauen Formulierung des Klebstoffs.

Der Klebstoff beziehungsweise das daraus hergestellte Klebeband sind überraschenderweise außergewöhnlich lagerstabil. Bei einer Lagertemperatur von 60 °C sind der Klebstoff bzw. das daraus hergestellte Klebeband ungefähr einen Monat stabil, das heißt ohne Einschränkungen verwendbar. Bei einer Lagertemperatur von 23 °C ist eine Lagerstabilität von mehr als einem Jahr gegeben.

Als Träger können alle bekannten Folien und textilen Träger wie Gestricke, Gelege, Bänder, Geflechte, Nadelflortextilien, Filze, Gewebe (umfassend Leinwand-, Köper und Atlasbindung), Gewirke (umfassend Kettenwirkware und Strickware) oder Vliese verwendet werden, wobei unter "Vlies" zumindest textile Flächengebilde gemäß EN 29092 (1988) sowie Nähwirkvliese und ähnliche Systeme zu verstehen sind. Besonders vorteilhaft ist ein Klebeband, bei dem als Träger ein Gewebe, ein Vlies oder ein Gewirke eingesetzt wird. Derartige Träger sind beispielsweise in der WO 2015/004190 A1 beschrieben, auf die hier vollständig Bezug genommen wird.

Des Weiteren können Abstandsgewebe und -gewirke mit Kaschierung verwendet werden. Derartige Abstandsgewebe werden in der EP 0 071 212 B1 offenbart. Abstandsgewebe sind mattenförmige Schichtkörper mit einer Deckschicht aus einem Faseroder Filamentvlies, einer Unterlagsschicht und zwischen diesen Schichten vorhandene einzelne oder Büschel von Haltefasern, die über die Fläche des Schichtkörpers verteilt durch die Partikelschicht hindurchgenadelt sind und die Deckschicht und die Unterlagsschicht untereinander verbinden.

Als Vliesstoffe kommen besonders verfestigte Stapelfaservliese, jedoch auch Filament-, Meltblown sowie Spinnvliese in Frage, die meist zusätzlich zu verfestigen sind. Als mögliche Verfestigungsmethoden sind für Vliese die mechanische, die thermische sowie die chemische Verfestigung bekannt. Besonders vorteilhaft haben sich Vliese erwiesen, die insbesondere durch ein Übernähen mit separaten Fäden oder durch Vermaschen verfestigt sind. Derartige verfestigte Vliese werden beispielsweise auf Nähwirkmaschinen des Typs "Malimo" der Firma Karl Mayer, ehemals Malimo, hergestellt und sind unter anderem bei der Firma Hoftex Group AG beziehbar.

Als Träger kann weiterhin ein Vlies vom Typ Kunit oder Multiknit verwendet werden. Ein Kunitvlies ist dadurch gekennzeichnet, dass es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Malimo" der Firma Karl Mayer schon seit längerer Zeit hergestellt.

Ein Multiknitvlies ist gegenüber dem Kunitvlies dadurch gekennzeichnet, dass das Vlies durch das beidseitige Durchstechen mit Nadeln sowohl auf der Ober- als auch auf der Unterseite eine Verfestigung erfährt. Als Ausgangsprodukt für ein Multiknit dienen in der Regel ein beziehungsweise zwei nach dem Kunit-Verfahren hergestellte einseitig vermaschte Polfaser-Vlieswirkstoffe. Im Endprodukt sind beide Vliesstoffoberseiten durch Faservermaschungen zu einer geschlossenen Oberfläche geformt und durch nahezu senkrecht stehenden Fasern miteinander verbunden. Die zusätzliche Einbringbarkeit weiterer durchstechbarer Flächengebilde und/oder streufähiger Medien ist gegeben.

Schließlich sind auch Nähvliese als Vorprodukt geeignet, einen erfindungsgemäßen Träger und ein erfindungsgemäßes Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Malimo" der Firma Karl Mayer bekannt.

Besonders geeignet sind auch Nadelvliese. Beim Nadelvlies wird ein Faserflor zu einem Flächengebilde mit Hilfe von mit Widerhaken versehenen Nadeln. Durch wechselndes Einstechen und Ausziehen der Nadeln wird das Material auf einem Nadelbalken verfestigt, wobei sich die Einzelfasern zu einem festen Flächengebilde verschlingen.

Weiterhin besonders vorteilhaft ist ein Stapelfaservlies, das im ersten Schritt durch mechanische Bearbeitung vorverfestigt wird oder das ein Nassvlies ist, das hydrodynamisch gelegt wurde, wobei zwischen 2 Gew.-% und 50 Gew.-% der Fasern des Vlieses Schmelzfasern sind, insbesondere zwischen 5 Gew.-% und 40 Gew.-% der Fasern des Vlieses. Ein derartiges Vlies ist dadurch gekennzeichnet, dass die Fasern nass gelegt werden oder zum Beispiel ein Stapelfaservlies durch die Bildung von Maschen aus Fasern des Vlieses durch Nadelung, Vernähung, Luft und/oder Wasserstrahlbearbeitung vorverfestigt wird. In einem zweiten Schritt erfolgt die Thermofixierung, wobei die Festigkeit des Vlieses durch das Auf- oder Anschmelzen der Schmelzfasern nochmals erhöht wird.

Vorteilhaft und zumindest bereichsweise weist der Träger eine ein- oder beidseitig glattgeschliffene Oberfläche auf, vorzugsweise jeweils eine vollflächig glattgeschliffene Oberfläche. Die glattgeschliffene Oberfläche mag gechintzt sein, wie es beispielsweise in der EP 1 448 744 A1 erläutert wird. Auf diese Weise wird die Abweisbarkeit von Schmutz verbessert.

Als Ausgangsmaterialien für den Träger sind insbesondere (Chemie-)Fasern (Stapelfaser oder Endlosfilament) aus synthetischen Polymeren, auch synthetische Fasern genannt, aus Polyester wie Polyethylenterephthalat, Polyamid, Polyimid, Aramid, Polyolefin, Polyacrylnitril oder Glas, (Chemie)Fasern aus natürlichen Polymeren wie zellulosische Fasern (Viskose, Modal, Lyocell, Cupro, Acetat, Triacetat, Cellulon), wie Gummifasern, wie Pflanzeneiweißfasern und/oder wie Tiereiweißfasern und/oder natürliche Fasern aus Baumwolle, Sisal, Flachs, Seide, Hanf, Leinen, Kokos oder Wolle vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Vlieses eingesetzt werden.

Des Weiteren sind Garne, gefertigt aus den angegebenen Rohstoffen, ebenfalls geeignet. Bei Geweben oder Gelegen können einzelne Fäden aus einem Mischgarn hergestellt werden, also synthetische und natürliche Bestandteile aufweisen. In der Regel sind die Kettfäden und die Schussfäden jedoch jeweils sortenrein ausgebildet.

Bevorzugt wird als Material für den Träger Polyester verwendet, aufgrund der hervorragenden Alterungsbeständigkeit und der hervorragenden Medienbeständigkeit gegenüber Chemikalien und Betriebsmitteln wie Öl, Benzin, Frostschutzmittel u.ä. Darüber hinaus hat Polyester den Vorteil, dass sie zu einem sehr abriebfesten und temperaturbeständigen Träger führen, was für den speziellen Einsatzzweck zur Bündelung von Kabeln in Automobilen und beispielsweise im Motorraum von besonderer Wichtigkeit ist. Gemäß einer Ausführungsform der Erfindung wird als Träger ein PET-Vlies oder ein PET-Gewebe verwendet.

Vorteilhaft liegt das Flächengewicht des textilen Trägers zwischen 30 g/m$^2$ und 300 g/m$^2$ weiter vorteilhaft zwischen 50 g/m$^2$ und 200 g/m$^2$, besonders vorteilhaft zwischen 50 g/m$^2$ und 150 g/m$^2$, ganz besonders vorteilhaft zwischen 70 g/m$^2$ und 130 g/m$^2$.

Gemäß einer besonders vorteilhaften Ausführungsform der Erfindung werden als Träger ein Gewebe oder ein Vlies aus Polyester eingesetzt, die ein Flächengewicht zwischen 50 g/m$^2$ und 150 g/m$^2$ aufweisen.

Vorteilhaft liegt der Masseauftrag des auf den Träger aufgebrachten und/oder in den Träger eingebrachten Bindemittels zwischen 30 g/m$^2$ und 500 g/m$^2$, weiter vorteilhaft zwischen 40 g/m$^2$ und 400 g/m$^2$, besonders vorteilhaft zwischen 50 g/m$^2$ und 300 g/m$^2$.

Das Einbringen in den Träger, insbesondere in einen Vlies- oder Gewebeträger kann beispielsweise durch Extrusionsbeschichtung des Trägers mit der thermisch härtbaren Zusammensetzung erfolgen.

Die Verarbeitungstemperatur des mit der Klebemasse und der thermisch härtbaren Klebeschicht beschichteten Trägers sollte bei der Trocknung 60 °C nicht überschreiten, um eine vorzeitige Reaktion zu verhindern. Gleiches gilt auf für die Lagerungstemperatur.

Das fertig beschichtete Material wird vorzugsweise in eine Breite von 20±2 mm (jede andere Breite ist ebenfalls denkbar) geschnitten und spiralförmig mit einer Überlappung von 50% um das in Form gebrachte Kabelbündel gewickelt. Für die Aktivierung der themisch härtbaren Klebeschicht ist eine Temperaturbeaufschlagung von 110 °C für 10 min nötig. Die Temperaturbeaufschlagung kann durch Heißluftfön, IR-Strahler, Ofen, Heizmanschette, o.ä. erfolgen.

Gemäß einer bevorzugten Ausführungsform der Erfindung ist die Klebemasse nach dem Aufbringen auf den Träger zu mehr als 10 %, vorzugsweise zu mehr als 25 %, weiter vorzugsweise zu mehr als 50 % in den Träger eingesunken. Ein Zahlenwert von beispielsweise 25 % bedeutet dabei, dass die Klebemasse über eine Schichtdicke von 25 % der Dicke des textilen Trägers eingedrungen ist, also bei einem Träger mit einer Dicke von 100 $\mu$m über eine Schichtdicke von 25 um innerhalb des Trägers, und zwar beginnend von der Fläche des Trägers, auf der die Klebemasse beschichtet ist, und in senkrechter Richtung zu der von der Längs-beziehungsweise Quererrichtung aufgespannten Ebene.

Das fertig beschichtete Material wird vorzugsweise mit einer Schutzfolie versehen.

Gegenstand der vorliegenden Erfindung ist ein Verfahren zum Ummanteln von langgestrecktem Gut wie insbesondere Leitungen oder Kabelsätzen, wobei ein Klebeband gemäß einem der vorangehenden Ansprüche in einer Schraubenlinie um das langgestreckte Gut geführt wird oder das langgestreckte Gut in axialer Richtung von dem Klebeband umhüllt wird, das langgestreckte Gut mitsamt dem umhüllenden Klebeband in die gewünschte Anordnung, insbesondere in den Kabelsatzplan gebracht wird, das langgestreckte Gut in dieser Anordnung gehalten wird, die aushärtbare Klebemasse durch die Zufuhr von Wärme bei einer Temperatur von bis zu 110 °C, bevorzugt zwischen 60 °C und 110 °C zum Aushärten gebracht wird. Vorzugsweise wird die thermische Energie über einen Zeitraum von 0,5 Sek. bis 10 Min., vorzugsweise 2 Min. bis 6 Min. zugeführt, der mit den Taktzeiten des Fertigungsprozesses kompatibel ist, so dass das langgestreckte Gut vollständig ausgehärtet ist, sobald es im Zielobjekt wie Automobilen, Wasserfahrzeugen oder Flugzeugen verbaut wird.

Das Band wird vorzugsweise spiralförmig mit einer Überlappung von 30 % bis 70 %, bevorzugter 40 % bis 50 %, insbesondere etwa 50 % um das langgestreckte Gut umwickelt.

Schließlich bezieht sich die vorliegende Erfindung auch auf einen mit dem gehärteten Klebeband ummantelten Kabelstrang und auf einen nach dem erfindungsmäßen Verfahren hergestellten Kabelstrang.

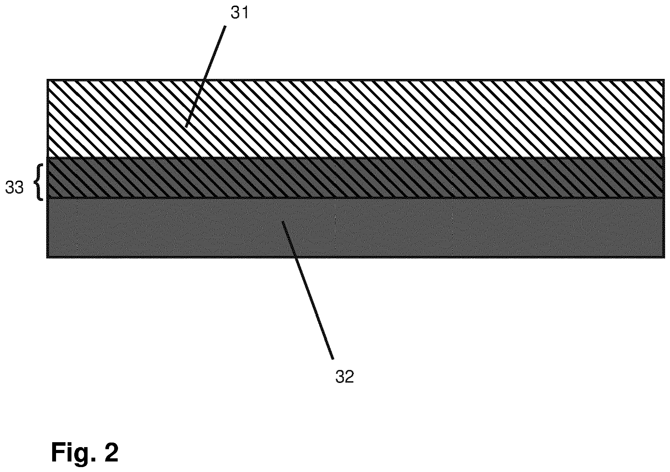

In der Figur 2 ist im Schnitt in Querrichtung (Querschnitt) das Klebeband gezeigt, das aus einem Vliesträger 31 besteht, auf den einseitig eine Schicht einer aushärtbaren Klebemasse 32 aufgebracht ist, die zusätzlich selbstklebend ist.

Die Klebemasse ist zu 25 % in den Träger eingesunken (33), was eine optimale Verankerung bewirkt.

Ebenfalls vom erfinderischen Gedanken umfasst ist ein ummanteltes langgestrecktes Gut, wie insbesondere ein Kabelsatz, ummantelt mit einem erfindungsgemäßen Klebeband, sowie ein Fahrzeug, enthaltend ein derartig ummanteltes langgestrecktes Gut.

Prüfmethoden

Die folgenden Prüfmethoden wurden eingesetzt, um die hergestellten Muster kurz zu charakterisieren:

Dynamischer Schertest (Zugscherfestigkeit)

Der dynamische Schertest erfolgte in Anlehnung an DIN EN 1465. Er erfolgte stets nach der thermischen Härtung der verklebten Proben. Dazu wurden aus einer Klebebandschicht aus dem Klebstoff, die beidseitig jeweils mit einem Trennpapier abgedeckt war, rechteckige Stanzlinge mit den Maßen 25,0 mm × 12,5 mm ausgestanzt. Die Trennpapiere wurden daraufhin jeweils von einer Seite eines Stanzlings abgezogen. Die Dicke der Stanzlinge betrug stets zwischen 0,4 und 0,6 mm (0,5 ± 0,1 mm).

Die Stanzlinge wurden passgenau jeweils auf das Ende eines Prüfkörpers (Substrates) mit den Maßen 100,0 mm x 25,0 mm x 2,0 mm aufgelegt. Die Stanzlinge hafteten nun jeweils auf diesem Prüfkörper. Verwendet wurden Prüfkörper aus kataphoretisch tauchlackiertem Stahl (KTL-Stahl), Stahl, elektrolytisch verzinktem Stahl und feuerverzinktem Stahl. Die Bezeichnungen der Prüfkörper lauteten:

Kataphoretisch tauchlackierter Stahl (KTL-Stahl): Stahlprüfkörper aus DC04, nach Zuschnitt beschichtet mit Daimler OEM KTL Kathoguard 800
Stahl: DC04
Elektrolytisch verzinkter Stahl: DC01ZE 25/25
Feuerverzinkter Stahl: DX51 D+Z275

Lieferant aller genannten Prüfkörper war die Firma Rocholl GmbH. Die nicht lackierten Prüfkörper wurden vor dem Auflegen der Stanzlinge zum Teil beölt (siehe Ergebnistabellen) . Das Öl hatte die Bezeichnung Anticorit RP 4107 S (Firma Fuchs) und wurde in einer Stärke von 2 bis 3 g/m$^2$ aufgetragen. Anschließend wurde das noch auf den Stanzlingen verbliebene Trennpapier abgezogen. Darauf wurden Prüfkörper aus dem jeweils gleichen Material jeweils bündig mit einem Ende so gelegt, dass wie in DIN EN 1465 beschrieben, jeweils ein überlappender Verbund resultierte.

Die Überlappungslänge betrug jeweils 12,5 mm. Die Überlappungsfläche betrug jeweils 312,5 mm$^2$. Die überlappenden Verbunde wurden auf ein Blech gelegt, wobei durch Unterlegscheiben dafür Sorge getragen wurde, dass der obere Prüfkörper nicht kippen konnte. Auf den oberen Prüfkörper wurde im Bereich der Überlappungsfläche jeweils ein Gewicht von 2 kg gestellt. Der Verbund wurde dem Druck des Gewichtes 10 Sekunden jeweils bei Raumtemperatur ausgesetzt (Verpresszeit). Sodann wurde das Gewicht entfernt. Der Verbund wurde anschließend 5 bis 30 Minuten einer Temperatur zwischen 110 °C bis 230 °C ausgesetzt. Dabei kam es zu einer Härtungsreaktion innerhalb der Klebebandschicht-Proben und zu einer sich aufbauenden starken Haftung zwischen den jeweiligen Klebebandschicht-Proben und den jeweiligen Prüfkörpern. Es kam somit zu einer Verklebung mit einer erheblichen Festigkeitszunahme. Nach Abkühlung und einer Wartezeit von zwei bis drei Stunden erfolgte die Bestimmung der Zugscherfestigkeit.

Die Bestimmung der Zugscherfestigkeit von Überlappungsverklebungen ermöglicht Aussagen über die Scherbelastbarkeit eines doppelseitig klebenden Klebeprodukts. Die Bestimmung erfolgte gemäß DIN EN 1465 mittels einer Zugprüfmaschine. Die Prüfgeschwindigkeit betrug 10 mm/min. Alle Messungen wurden in einem klimatisierten Raum bei 23 °C und 50 % relativer Luftfeuchte durchgeführt.

Experimenteller Teil

Herstellung des Klebstoffs und der Klebebandschicht

Der Klebstoff wurde in Laboransätzen in einem beheiz- und evakuierbaren 1 Liter-Planetenmischer der Firma PC-Laborsystem gefertigt. Dazu wurde zunächst das epoxidfunktionalisierte Acrylnitril/Butadien-Copolymer auf 60 °C vorerwärmt und dann zusammen mit dem vorzugsweise gemahlenen Reaktionsprodukt aus Phthalsäureanhydrid und Diethylentriamin und gegebenenfalls den weiteren, optionalen Formulierungsbestandteilen in die Mischdose eingewogen und anschließend bei einer Temperatur von 40 °C bis 60 °C zwei Stunden lang gemischt. In der zweiten Stunde wurde Vakuum angelegt, um die Mischung von Restfeuchtigkeit zu befreien. Danach wurde aus der Mischung jeweils ein Film in der gewünschten Dicke durch Verpressen der Mischung zwischen zwei mit silikonisierten Polyester-Folien abgedeckten Stahlplatten bei 60 °C hergestellt. Nach der so erfolgten Ausformung wurde der Film auf Raumtemperatur abgekühlt, wodurch er sich verfestigte. Der so hergestellte Film ist die Klebebandschicht.

Einige der Klebstoffe wurden in alternativer Weise in einem Compoundierextruder gefertigt.

Dazu wurde das epoxidfunktionalisierte Acrylnitril/Butadien-Copolymer mit Hilfe einer Fassschmelzepumpe bei 60 °C in einen Doppelschneckenextruder der Firma Krauss Maffei Berstorff, Bezeichnung Extruder ZE30Rx54D UTXmi, gepumpt. Der Extruder wurde von außen auf ca. 40 °C bis 60 °C elektrisch beheizt und über verschiedene Gebläse luftgekühlt. Er war so konzipiert, dass eine gute Durchmischung von dem epoxidfunktionalisierten Acrylnitril/Butadien-Copolymer und den weiteren Stoffen, wie insbesondere dem vorzugsweise gemahlenen Reaktionsprodukt aus Phthalsäureanhydrid und Diethylentriamin, den Füllstoffen, sowie den weiteren Hilfs- und Zusatzstoffen bei kurzer Verweilzeit im Extruder gewährleistet war. Dazu wurden die Mischwellen des Doppelschneckenextruders so angeordnet, dass sich fördernde und mischende Elemente abwechselten. Die Zugabe der weiteren Stoffe erfolgte mit geeignetem Dosierequipment unter Verwendung von Dosierhilfsmitteln in die druckfreien Förderzonen des Doppelschneckenextruders. Alternativ zum Doppelschneckenextruder können vorteilhaft auch ein Planetwalzenextruder oder ein Ringextruder verwendet werden, da hiermit die Compoundiertemperaturen leichter unter 60 °C gehalten werden können. Vorteilhafte Extruder ermöglichen zudem die Entgasung des Compounds.

Nach Austritt der ca. 60 °C heißen Mischung aus dem Doppelschneckenextruder (Austritt: Runddüse 5 mm Durchmesser) erfolgte die Ausformung zum Film direkt mittels eines nachgeschalteten Zweiwalzenauftragswerks zwischen zwei zulaufenden, beidseitig silikonisierten, 50 μm dicken Polyesterfolien. Die Zulaufgeschwindigkeit wurde zwischen 1 m/min und 20 m/min variiert. Eine der zulaufenden, beidseitig silikonisierten Polyesterfolien wurde nach Abkühlung des Films und damit Verfestigung sofort wieder ausgedeckt. Der vorliegende Film wurde anschließend auf einen zylindrischen Kern aufgewickelt. Dieser Film ist die Klebebandschicht.

In Tabelle 1 sind die zur Herstellung des Klebstoffs und der Klebebandschicht verwendeten Basismaterialien (Rohstoffe) aufgeführt, und zwar jeweils mit Handelsnamen, Hersteller und den für diese Erfindung relevanten technischen Daten.

Tabelle 1: Zur Herstellung des Klebstoffs verwendete Basismaterialien (Rohstoffe)

| Handelsname | Beschreibung | Epoxid-Äquiva-entgewicht (g/ Eq) | NH-Äquiv-alent-gewicht (g/ Eq) | Hersteller / Lieferant |
|---|---|---|---|---|
| Struktol ® Polydis 3610 | Mit Bisphenol-A-diglycidylether-Harz epoxidterminiertes, kettenverlängertes Acrylnitril /Butadien-Copolymer (CTBN-Basis) * | 600 | | Schill+ Seilacher |
| Struktol ® Polydis 3611 | Mit Bisphenol-F-diglycidylether-Harz epoxidterminiertes, kettenverlängertes Acrylnitril /Butadien-Copolymer (CTBN-Basis) * | 550 | | Schill+ Seilacher |
| Struktol ® Polydis 3614 | Mit Bisphenol-A-diglycidylether-Harz epoxidterminiertes, Acrylnitril /Butadien-Copolymer (CTBN-Basis) * | 330 | | Schill+Se ilacher |
| Struktol ® Polydis 3691 | Mit Bisphenol-A-diglycidylether-Harz epoxidierter, vorvernetzter Nitrilkautschuk | 205 | | Schill+Se ilacher |
| Aradur ® 9506 | Gemahlenes Umsetzungsprodukt aus Phthalsäureanhydrid und Diethylentriamin, CAS-Nummer: 68003-28-1 | | 77,7 | Huntsman |
| Talkum Pharma M ® | Talkum, CAS-Nr. : 14807-96-6, spez. Oberfläche: 4,6 m²/g | | | Scheruhn GmbH |
| Omyacarb ® 5-GU | Gemahlene Kreide, mittlerer Teilchendurchmesser: 5,5 $\mu$m | | | Omya |
| * CTBN = Carboxyl-terminierte Copolymere aus Acrylnitril und Butadien | | | | |

**Beispiele**

**Beispiel 1**

Der Klebstoff setzt sich wie folgt zusammen:
Zusammensetzung Beispiel 1:

| Rohstoff | Gewichtsanteil [Gew.-%] | Anzahl der eingebrachten Epoxidbeziehungsweise NH-Gruppen, bezogen auf den prozentualen Gewichtsanteil | Verhältnis der Anzahl der der Epoxidgruppen zur Anzahl der NH-Gruppen, normiert auf 1,00 mmol Epoxidgruppen |
|---|---|---|---|
| Struktol ® Polydis 3610 | 91,4 | 152,3 mmol Epoxid | 1,00 |
| Aradur ® 9506 | 8, 6 | 110,7 mmol NH | 0,73 |
| Summe | 100,00 | | |

Die Herstellung erfolgte im Laboransatz (1Liter) und im Extrusionsverfahren.

Ergebnisse:

Zugscherfestigkeiten [MPa]:

| | Substrat | KTL | | |
|---|---|---|---|---|
| | Aushärtetemperatur | 110 °C | 130 °C | 160 °C |
| Aushärtezeit | 5 Minuten | 2,1 (A) | 5,9 (A) | 17,9 (MB) |
| | 15 Minuten | 10,7 (MB) | 16,3 (MB) | 20,8 (K) |
| | 30 Minuten | 13,4 (K) | 20,2 (K) | 22,6 (K) |

Bruchbilder: A= Adhäsiv, MB= Mischbruch, K= Kohäsiv (kein Sprödbruch)

Die Lagerstabilität betrug länger als einen Monat bei 60 °C und länger als ein Jahr bei 23 °C.

Der Klebstoff ist vor der Aushärtung haftklebrig.

**Beispiel 2**

Der Klebstoff setzt sich wie folgt zusammen:

Zusammensetzung Beispiel 2:

| Rohstoff | Gewichtsanteil [Gew.-%] | Anzahl der eingebrachten Epoxidbeziehungsweise NH-Gruppen, bezogen auf den prozentualen Gewichtsanteil | Verhältnis der Anzahl der der Epoxidgruppen zur Anzahl der NH-Gruppen, normiert auf 1,00 mmol Epoxidgruppen |
|---|---|---|---|
| Struktol ® Polydis 3610 | 95,5 | 159,2 mmol Epoxid | 1,00 |
| Aradur ® 9506 | 4,5 | 57,9 mmol NH | 0,36 |
| Summe | 100,00 | | |

Die Herstellug erfolgte im Laboransatz (1Liter) und im Extrusionsverfahren.

13

Ergebnisse:

Zugscherfestigkeiten [MPa]:

| | Substrat | KTL | | |
|---|---|---|---|---|
| | Aushärtetemperatur | 110 °C | 130 °C | 160 °C |
| Aush... | 5 Minuten | 1,2 (A) | 3,6 (A) | 10,5 (MB) |

| | 15 Minuten | 3,1 (MB) | 6,0 (K) | 12,2 (K) |
|---|---|---|---|---|
| | 30 Minuten | 5,0 (MB) | 8,9 (K) | 13,6 (K) |

Bruchbilder: A= Adhäsiv, MB= Mischbruch, K= Kohäsiv (kein Sprödbruch)

Die Lagerstabilität betrug länger als einen Monat bei 60 °C und länger als ein Jahr bei 23 °C.

Der Klebstoff ist vor der Aushärtung haftklebrig.

**Beispiel 3**

Der Klebstoff setzt sich wie folgt zusammen:

Zusammensetzung Beispiel 3:

| Rohstoff | Gewichtsanteil [Gew.-%] | Anzahl der eingebrachten Epoxidbeziehungsweise NH-Gruppen, bezogen auf den prozentualen Gewichtsanteil | Verhältnis der Anzahl der der Epoxidgruppen zur Anzahl der NH-Gruppen, normiert auf 1,00 mmol Epoxidgruppen |
|---|---|---|---|
| Struktol ® Polydis 3610 | 73,1 | 121,8 mmol Epoxid | 1,00 |
| Aradur ® 9506 | 6,9 | 88,8 mmol NH | 0,73 |
| Talkum Pharma M ® | 20,0 | | |
| Summe | 100,00 | | |

Die Herstellung erfolgte im Laboransatz (1Liter) und im Extrusionsverfahren.

Ergebnisse:

Zugscherfestigkeiten [MPa]:

| | Substrat | KTL | | |
|---|---|---|---|---|
| | Aushärtetemperatur | 110 °C | 130 °C | 160 °C |
| Aushär- | 5 Minuten | 1,9 (A) | 4,5 (MB) | 10,2 (K) |
| | 15 Minuten | 6,4 (K) | 8,9 (K) | 11,0 (K) |
| | 30 Minuten | 8,7 (K) | 11,4 (K) | 12,2 (K) |

| Aushärtetemperatur/ Aushärtezeit | 180 °C / 30 Minuten | | | | | |
|---|---|---|---|---|---|---|
| Substrat | Stahl | Stahl geölt | Elektrolytisch verzinkter Stahl | Elektrolytisch verzinkter Stahl, geölt | Feuerverzinkter Stahl | Feuerverzinkter Stahl, geölt |
| Zugscherfestigkeit [MPa] | 11,6 (K) | 12,9 (K) | 14,7 (K) | 10,6 (MB) | 15,3 (K) | 12,3 (MB) |

Bruchbilder: A= Adhäsiv, MB= Mischbruch, K= Kohäsiv (kein Sprödbruch)

Die Lagerstabilität betrug länger als einen Monat bei 60 °C und länger als ein Jahr bei 23 °C.

Der Klebstoff ist vor der Aushärtung haftklebrig.

**Beispiel 4**

Der Klebstoff setzt sich wie folgt zusammen:
Zusammensetzung Beispiel 4:

| Rohstoff | Gewichtsanteil [Gew.-%] | Anzahl der eingebrachten Epoxidbeziehungsweise NH-Gruppen, bezogen auf den prozentualen Gewichtsanteil | Verhältnis der Anzahl der der Epoxidgruppen zur Anzahl der NH-Gruppen, normiert auf 1,00 mmol Epoxidgruppen |
|---|---|---|---|
| Struktol ® Polydis 3610 | 54,9 | 91,5 mmol Epoxid | 1,00 |
| Aradur ® 9506 | 5,1 | 65,6 mmol NH | 0,72 |
| Talkum Pharma M ® | 20,0 | | |
| Omyacarb ® 5-GU | 20,0 | | |
| Summe | 100,00 | | |

Die Herstellung erfolgte im Laboransatz (1Liter).

Ergebnisse:

Zugscherfestigkeiten [MPa]:

| Substrat | KTL | | |
|---|---|---|---|
| Aushärtetemperatur | 110 °C | 130 °C | 160 °C |
| Aushär- 5 Minuten | 1,3 (A) | 3,5 (A) | 8,1 (MB) |
| 15 Minuten | 5,9 (K) | 7,0 (MB) | 11,9 (K) |
| 30 Minuten | 8,2 (K) | 10,7 (K) | 13,8 (K) |

| Aushärtetemperatur/ Aushärtezeit | 180 °C / 30 Minuten | | | | | |
|---|---|---|---|---|---|---|
| Substrat | Stahl | Stahl geölt | Elektrolytisch verzinkter Stahl | Elektrolytisch verzinkter Stahl, geölt | Feuerverzinkter Stahl | Feuerverzinkter Stahl, geölt |
| Zugscherfestigkeit [MPa] | 13,0 (K) | 9,5 (A) | 13,1 (MB) | 7,7 (A) | 13,5 (K) | 8,5 (MB) |

Bruchbilder: A= Adhäsiv, MB= Mischbruch, K= Kohäsiv (kein Sprödbruch)
Die Lagerstabilität betrug länger als einen Monat bei 60 °C und länger als ein Jahr bei 23 °C.
Der Klebstoff ist vor der Aushärtung haftklebrig.

**Beispiel 5**

Der Klebstoff setzt sich wie folgt zusammen:
Zusammensetzung Beispiel 5:

| Rohstoff | Gewichtsanteil [Gew.-%] | Anzahl der eingebrachten Epoxidbeziehungsweise NH-Gruppen, bezogen auf den prozentualen Gewichtsanteil | Verhältnis der Anzahl der der Epoxidgruppen zur Anzahl der NH-Gruppen, normiert auf 1,00 mmol Epoxidgruppen |
|---|---|---|---|
| Struktol ® Polydis 3611 | 90,7 | 164,9 mmol Epoxid | 1,00 |
| Aradur ® 9506 | 9,3 | 119,7 mmol NH | 0,73 |
| Summe | 100,00 | | |

Die Herstellung erfolgte im Laboransatz (1Liter).

Ergebnisse:

Zugscherfestigkeiten [MPa]:

| | Substrat | KTL | | |
|---|---|---|---|---|
| | Aushärtetem-peratur | 110 °C | 130 °C | 160 °C |
| Aushär- | 5 Minuten | 1,9 (A) | 3,8 (A) | 15,2 (MB) |
| | 15 Minuten | 7,2 (MB) | 13,0 (K) | 16,9 (K) |
| | 30 Minuten | 9,4 (K) | 14,1 (K) | 17,4 (K) |

Bruchbilder: A= Adhäsiv, MB= Mischbruch, K= Kohäsiv (kein Sprödbruch)
Die Lagerstabilität betrug länger als einen Monat bei 60 °C und länger als ein Jahr bei 23 °C.
Der Klebstoff ist vor der Aushärtung haftklebrig.

**Beispiel 6**

Der Klebstoff setzt sich wie folgt zusammen:
Zusammensetzung Beispiel 6:

| Rohstoff | Gewichtsanteil [Gew.-%] | Anzahl der eingebrachten Epoxidbeziehungsweise NH-Gruppen, bezogen auf den prozentualen Gewichtsanteil | Verhältnis der Anzahl der der Epoxidgruppen zur Anzahl der NH-Gruppen, normiert auf 1,00 mmol Epoxidgruppen |
|---|---|---|---|
| Struktol ® Polydis 3614 | 42,7 | 129,4 mmol Epoxid | 1,00 |
| Aradur ® 9506 | 7,3 | 94,0 mmol NH | 0,73 |
| Talkum Pharma M ® | 30,0 | | |
| Omyacarb ® 5-GU | 20,0 | | |
| Summe | 100,00 | | |

Die Herstellung erfolgte im Laboransatz (1Liter).

**Beispiel 7**

Der Klebstoff setzt sich wie folgt zusammen:
Zusammensetzung Beispiel 7:

| Rohstoff | Gewichtsanteil [Gew.-%] | Anzahl der eingebrachten Epoxidbeziehungsweise NH-Gruppen, bezogen auf den prozentualen Gewichtsanteil | Verhältnis der Anzahl der der Epoxidgruppen zur Anzahl der NH-Gruppen, normiert auf 1,00 mmol Epoxidgruppen |
|---|---|---|---|
| Struktol ® Polydis 3691 | 39, 2 | 191,2 mmol Epoxid | 1,00 |
| Aradur ® 9506 | 10,8 | 139,0 mmol NH | 0,73 |
| Talkum Pharma M ® | 30,0 | | |
| Omyacarb ® 5-GU | 20,0 | | |
| Summe | 100,00 | | |

Die Herstellung erfolgte im Laboransatz (1Liter).

**Beispiel 8** - Biegeprüfung zur Ermittlung der Steifigkeit

Ein Prüfmuster, bestehend aus 250 Einzelleitungen mit einem Leitungsquerschnitt von 0,35 mm$^2$, wurde mithilfe eines 9 mm breiten Klebebandes (tesa 51618) zu einem Musterleitungssatz gebündelt, so dass der Musterleitungssatz einen Durchmesser von $23\pm5$ mm und eine Länge von $300\pm50$ mm aufwies. Dieser Musterleitungssatz wurde mit dem versteifenden Material spiralförmig umwickelt, wobei ein Überlapp von 50 % gewährleistet wurde. Anschließend wurde das versteifende Material mittels Wärme gehärtet.

Der gehärtete Musterleitungssatz wurde einer Biegeprüfung unterzogen, um den Einfluss des versteifenden Materials auf die Steifigkeit zu bestimmen. Die Biegeprüfung wurde an einer Zugprüfmaschine vorgenommen. Dafür wurde der Musterleitungssatz auf zwei Backen mit einem Abstand von 70 mm gelegt und mittig mit einer Druckfinne um einen Weg von 30 mm eingedrückt und belastet. Die für die Verformung des Messwegs nötige Kraft wurde von einer Zugprüfmaschine in Newton aufgezeichnet. Die Prüfgeschwindigkeit betrug 100 mm/min, sowohl bei der Belastung, als auch bei der Entlastung des Musterleitungssatzes. Die Prüfung wurde an 3 verschiedenen Stellen des Leitungssatzes (Anfang, Mitte und Ende) durchgeführt. Die Biegekraft resultiert aus dem Mittelwert der drei Einzelmessungen und wurde in drei Kategorien wie folgt bewertet:

**Bewertungskategorien 3-Punkt Biegeversuch:**

   + gut geeignet für die Anwendung (500-750 N)
   O eingeschränkt geeignet für die Anwendung (400-500 N und 700-800 N)
   - nicht geeignet für die Anwendung (< 400 und > 800 N)

Zum Vergleich wurde ein kommerziell erhältliches Klebeband, tesa® 51036, dem gleichen Versuch unterworfen. Die Ergebnisse sind in der nachfolgenden Tabelle 1 aufgeführt.

**Beispiel 9** - C-Form-Prüfung zur Ermittlung der Steifigkeit bei unterschiedlichen Temperaturen

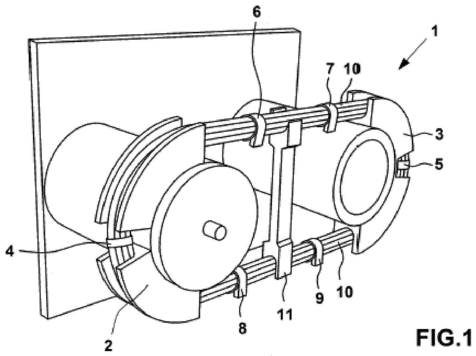

Zur Ermittlung der Steifigkeit eines gebogenen Kabelmusters wurde ein Testverfahren entwickelt (C-Kabelmuster-Biegeprüfung). Zur Herstellung eines C-Kabelmusters (siehe Figur 1) wird eine Kabelleitung (10) mit einem Leitungsquerschnitt von 0,35 mm$^2$ 100 mal um eine Halterung (1) zu einem Musterleitungssatz gewickelt. Die Halterung (1) weist zwei gegenüberliegende, halbkreisförmige Führungen (2, 3) mit einem Durchmesser von 120 mm auf, die mit einem Abstand (A) von etwa 210 mm beabstandet sind. Der gewickelte Kabelsatz ist in Fig. 1 dargestellt.

Die Zahl der Kabelwicklungen beträgt 100. Es entsteht ein Musterleitungssatz mit einem Durchmesser von 15±5 mm und einem Umfang von 690 mm. An den Apizes der Halbkreissegmente und an jeweils zwei Geradenabschnitten (Schenkeln) wird das Kabelbündel (10) mit Kabelbindern (4, 5, 6, 7, 8, 9) mit einer Zugkraft von 210±10 N zusammengeschnürt und fixiert, so dass das das Kabelbündel (10) nach Herausnahme aus der Halterung eine ausreichende Steifigkeit besitzt, um sich nicht zu verformen. Um sie Steifigkeit des Kabelbündels (10) weiter zu verbessern, wird zwischen den Schenkeln des Kabelbündels eine Stütze (11) positioniert und ebenfalls mit Kabelbindern fixiert.

Das so hergestellte Kabelbündel (10) wird aus der Halterung herausgenommen und mit dem zu prüfenden Klebeband (Breite 19 mm-20 mm) mit einer 50%igen Überlappung umwickelt. Dazu wird mit der Umwicklung an einem Kabelbinder (z.B. 6 oder (7)) des Schenkels in Richtung Kreissegment ((6)->(4) oder (7)->(5)) begonnen. Wenn die Umwicklung den Kabelbinder (4) bzw. (5) am Apex des Halbkreissegments erreicht, wird dieser entfernt und die Wicklung bis zum nächsten Kabelbinder ((4)->(8) bzw. (5) -> (9)) des gegenüberliegenden Schenkels fortgeführt. Genauso wird auch an der anderen Seite, am anderen Halbkreissegment verfahren.

Die so präparierten Muster werden der entsprechenden Vernetzungsmethode (thermische Energie, 110 °C) zugeführt. Mit einem Seitenschneider werden die Muster, benachbart zu den noch vorhandenen Kabelbindern geschnitten, um zwei "C-förmige" Kabelmuster (C-Kabelmuster) zu erhalten, die an beiden Seiten des halbkreisförmigen, umwickelten Abschnitts jeweils auch einen nicht umwickelten Abschnitt aufweisen. Der Schnitt erfolgt im Abstand des Durchmessers (120 mm) vom Apex des Halbkreissegments, projiziert auf die Kreismitte.

Mit je einem Stück Kabel werden Schlaufen an die Schenkelenden der Muster gebunden, damit sie an dem einen Ende aufgehängt und am anderen Ende ein Gewicht angehängt werden kann. Die verbliebenen Kabelbinder werden jetzt entfernt, da sie das Prüfergebnis verfälschen können. Der Abstand zwischen den Schenkeln wird nun bestimmt.

Eines der beiden Muster wird unter Raumtemperatur gelagert und das andere bei 60 °C.

An den jeweiligen unteren Schenkel des "C-Prüflings" wird ein 1 kg-Gewicht gehängt. Nach einer Stunde wird die Auslenkung des Kabelbündels notiert (Auslenkverhalten 1 h bei RT bzw. 60 °C) und das Gewicht entfernt. Nach einer Minute wird die Auslenkung erneut bestimmt (Rückstellverhalten 1 min bei RT bzw. 60 °C). Nach einer Stunde wird die Auslenkung dann wieder bestimmt und notiert (Rückstellverhalten 1 h bei RT bzw. 60 °C).

Die ermittelten Werte der C-Form-Verformung bei wurden in drei Kategorien eingestuft, gut geeignet für die Anwendung, eingeschränkt geeignet für die Anwendung und nicht geeignet für die Anwendung. Die Kategorien wurden wie folgt bewertet:

**Bewertungskategorien C-Form-Biegeversuch (Raumtemperatur):**

+ gut geeignet für die Anwendung (< 15 % Auslenkung)
O eingeschränkt geeignet für die Anwendung (>15-30 %)
- nicht geeignet für die Anwendung (>30 %)

**Bewertungskategorien C-Form-Biegeversuch (60 °C):**

+ gut geeignet für die Anwendung (< 25 % Auslenkung)
O eingeschränkt geeignet für die Anwendung (>25-40 %)
- nicht geeignet für die Anwendung (>40 %)

**Bewertungskategorien C-Form-Biegeversuch (Rückstellverhalten bei RT und 60 °C):**

+ gut geeignet für die Anwendung (< 10 % Auslenkung)
O eingeschränkt geeignet für die Anwendung (10-30 %)
- nicht geeignet für die Anwendung (>30 %)

Zum Vergleich wurde ein kommerziell erhältliches Klebeband, tesa[®] 51036, dem gleichen Versuch unterworfen. Die Ergebnisse sind ebenfalls in der nachfolgenden Tabelle 1 aufgeführt.

Tabelle 1:

|  | 3-Punkt Biegeversuch | C-Form-Verformung bei RT | C-Form-Rückstellverhalten bei RT |
| --- | --- | --- | --- |
| Beispiel 1 | + | + | + |
| tesa[®] 51036 | - | - | - |
|  |  |  |  |

(fortgesetzt)

|  | C-Form-Verformung bei 60 °C | C-Form-Rückstellverhalten bei 60 °C |  |
|---|---|---|---|
| Beispiel 1 | + | + |  |
| tesa® 51036 | - | - |  |
| Legende:<br>+ gut geeignet für die Anwendung<br>o eingeschränkt geeignet für die Anwendung<br>- nicht geeignet für die Anwendung |  |  |  |

**Bezugszeichenliste**

| 1 | Halterung |
|---|---|
| 2,3 | halbkreisförmige Führungen |
| 4, 5, 6, 7, 8, 9 | Kabelbinder |
| 10 | Kabelbündel |
| 11 | Stütze |

**Patentansprüche**

1. Verfahren zum Ummanteln von langgestrecktem Gut mit einem Klebeband umfassend einen bandförmigen Träger, der auf mindestens einer Seite mit einer thermisch härtbaren, schmelzbaren Klebeschicht versehen ist, wobei die Klebeschicht ein epoxidfunktionalisiertes Acrylnitril/Butadien-Copolymer mit durchschnittlich mehr als 1,5 Epoxidgruppen pro Molekül und das Reaktionsprodukt aus Phthalsäureanhydrid und Diethylentriamin umfasst, wobei das Klebeband in einer Schraubenlinie um das langgestreckte Gut geführt wird oder das langgestreckte Gut in axialer Richtung von dem Klebeband umhüllt wird, das langgestreckte Gut mitsamt dem umhüllenden Klebeband in die gewünschte Anordnung gebracht wird, das langgestreckte Gut in dieser Anordnung gehalten wird, die aushärtbare Klebemasse durch die Zufuhr von thermischer Energie bei einer Temperatur zwischen 60 °C und 230 °C zum Aushärten gebracht wird.

2. Verfahren nach Anspruch 1, **dadurch gekennzeichnet, dass** das epoxidfunktionalisierte Acrylnitril/Butadien-Copolymer, enthaltend in der thermisch härtbaren, schmelzbaren, vorzugsweise haftklebrigen Klebeschicht, das chemische Umsetzungsprodukt eines carboxylterminierten Acrylnitril/Butadien-Copolymers mit einem Bisphenol-A-diglycidylether oder einem Bisphenol-F-diglycidylether oder Epichlorhydrin ist.

3. Verfahren nach Anspruch 1 oder Anspruch 2, **dadurch gekennzeichnet, dass** das epoxidfunktionalisierte Acrylnitril/Butadien-Copolymer das chemische Umsetzungsprodukt eines carboxylterminierten Acrylnitril/Butadien-Copolymers mit einem durch chemische Umsetzung mit Bisphenol A oder Bisphenol F kettenverlängerten Bisphenol-A-diglycidylether oder Bisphenol-F-diglycidylether ist.

4. Verfahren nach zumindest einem der Ansprüche 1 bis 3, **dadurch gekennzeichnet, dass** das Reaktionsprodukt aus Phthalsäureanhydrid und Diethylentriamin einen freien Diethylentriamin-Gehalt von zwischen einschließlich 1.0 und 5.0 Gewichtsprozent hat.

5. Verfahren nach zumindest einem der vorherigen Ansprüche, **dadurch gekennzeichnet, dass** das Reaktionsprodukt aus Phthalsäureanhydrid und Diethylentriamin zu mindestens 95 Gewichtsprozent eine Korngröße von kleiner oder gleich 70 $\mu$m, gemessen mit Laser-Lichtstreuung nach ISO 13320:2009, hat.

6. Verfahren nach zumindest einem der vorherigen Ansprüche, **dadurch gekennzeichnet, dass** die Klebeschicht haftklebrig ist.

7. Verfahren nach zumindest einem der vorherigen Ansprüche, **dadurch gekennzeichnet, dass** das Trägermaterial ein Polyestervlies umfasst.

8. Verfahren nach zumindest einem der vorherigen Ansprüche, **dadurch gekennzeichnet, dass** die Klebemasse zu mehr als 10%, in den Träger eingesunken ist.

9. Verfahren nach zumindest einem der vorherigen Ansprüche, **dadurch gekennzeichnet, dass** die thermisch härtbare, schmelzbare, vorzugsweise haftklebrige Klebeschicht bei einer Temperatur zwischen 60°C und 110°C thermisch härtbar ist.

10. Verfahren nach zumindest einem der vorherigen Ansprüche, **dadurch gekennzeichnet, dass** die thermische Energie über einen Zeitraum von 0,5 Sek. bis 10 Min. zugeführt wird.

11. Verfahren nach zumindest einem der vorherigen Ansprüche, **dadurch gekennzeichnet, dass** die Anordnung, in die das langgestreckte Gut mitsamt dem umhüllenden Klebeband gebracht wird, ein Kabelsatzplan ist.

12. Verfahren nach zumindest einem der vorherigen Ansprüche, **dadurch gekennzeichnet, dass** das langgestreckte Gut Leitungen oder Kabelsätze sind.

13. Ummanteltes langgestrecktes Gut, wie insbesondere ein Kabelsatz, erhalten nach zumindest einem der vorherigen Ansprüche.

14. Verwendung eines ummantelten langgestreckten Gutes nach Anspruch 13 in einem Fahrzeug.

**Claims**

1. Method for jacketing an elongated item with an adhesive tape comprising a tapelike carrier provided on at least one side with a thermally curable, meltable adhesive layer, the adhesive layer comprising an epoxide-functionalized acrylonitrile/butadiene copolymer having on average more than 1.5 epoxide groups per molecule and the reaction product of phthalic anhydride and diethylenetriamine, where the adhesive tape is guided in a helical line around the elongated item or the elongated item is wrapped in an axial direction by the adhesive tape, the elongated item together with the adhesive tape wrapping is brought into the desired disposition, the elongated item is held in this disposition, and the curable adhesive is brought to cure by the supply of thermal energy at a temperature of between 60°C and 230°C.

2. Method according to Claim 1, **characterized in that** the epoxide-functionalized acrylonitrile/butadiene copolymer, contained in the thermally curable, meltable, preferably pressure-sensitive adhesive layer, is the chemical reaction product of a carboxyl-terminated acrylonitrile/butadiene copolymer with a bisphenol A diglycidyl ether or a bisphenol F diglycidyl ether or epichlorohydrin.

3. Method according to Claim 1 or Claim 2, **characterized in that** the epoxide-functionalized acrylonitrile/butadiene copolymer is the chemical reaction product of a carboxyl-terminated acrylonitrile/butadiene copolymer with a bisphenol A diglycidyl ether or bisphenol F diglycidyl ether chain-extended by chemical reaction with bisphenol A or bisphenol F.

4. Method according to at least one of Claims 1 to 3, **characterized in that** the reaction product of phthalic anhydride and diethylenetriamine has a free diethylenetriamine content of between inclusively 1.0 and 5.0 percent by weight.

5. Method according to at least one of the preceding claims, **characterized in that** the reaction product of phthalic anhydride and diethylenetriamine has to an extent of at least 95 percent by weight a particle size of less than or equal to 70 $\mu$m, measured by laser light scattering according to ISO 13320:2009.

6. Method according to at least one of the preceding claims, **characterized in that** the adhesive layer is pressure-sensitive.

7. Method according to at least one of the preceding claims, **characterized in that** the carrier material comprises a polyester nonwoven.

8. Method according to at least one of the preceding claims, **characterized in that** the adhesive has sunk into the carrier to an extent of more than 10%.

9. Method according to at least one of the preceding claims, **characterized in that** the thermally curable, meltable, preferably pressure-sensitive adhesive layer is thermally curable at a temperature between 60°C and 110°C.

10. Method according to at least one of the preceding claims, **characterized in that** the thermal energy is supplied over a period of 0.5 sec to 10 min.

11. Method according to at least one of the preceding claims, **characterized in that** the disposition into which the elongated item together with the adhesive tape wrapping is brought is a cable set plan.

12. Method according to at least one of the preceding claims, **characterized in that** the elongated item comprises leads or cable sets.

13. Jacketed elongated item, such as more particularly a cable set, obtained according to at least one of the preceding claims.

14. Use of a jacketed elongated item according to Claim 13 in a vehicle.

**Revendications**

1. Procédé de gainage d'un produit allongé par un ruban adhésif comprenant au moins un support en forme de ruban, qui est pourvu sur au moins une face d'une couche adhésive fusible, thermiquement durcissable, la couche adhésive comprenant un copolymère d'acrylonitrile/butadiène fonctionnalisé par époxyde présentant en moyenne plus de 1,5 groupe époxyde par molécule et le produit de réaction d'anhydride d'acide phtalique et de diéthylènetriamine, le ruban adhésif étant guidé selon une ligne hélicoïdale autour du produit allongé ou le produit allongé étant enveloppé dans la direction axiale par le ruban adhésif, le produit allongé, conjointement avec le ruban adhésif enveloppant, étant amené dans l'agencement souhaité, le produit allongé étant tenu dans cet agencement, la masse adhésive durcissable étant amenée à durcir par la fourniture d'énergie thermique à une température entre 60°C et 230°C.

2. Procédé selon la revendication 1, **caractérisé en ce que** le copolymère d'acrylonitrile/butadiène fonctionnalisé par époxyde, contenu dans la couche adhésive fusible, thermiquement durcissable, de préférence autoadhésive, est le produit de transformation chimique d'un copolymère d'acrylonitrile/butadiène terminé par carboxyle avec un bisphénol-A-diglycidyléther ou un bisphénol-F-diglycidyléther ou l'épichlorhydrine.

3. Procédé selon la revendication 1 ou la revendication 2, **caractérisé en ce que** le copolymère d'acrylonitrile/butadiène fonctionnalisé par époxyde est le produit de transformation chimique d'un copolymère d'acrylonitrile/butadiène terminé par carboxyle avec un bisphénol-A-diglycidyléther ou un bisphénol-F-diglycidyléther à chaîne allongée par transformation chimique avec du bisphénol A ou du bisphénol F.

4. Procédé selon au moins l'une des revendications 1 à 3, **caractérisé en ce que** le produit de réaction d'anhydride d'acide phtalique et de diéthylènetriamine présente une teneur en diéthylènetriamine libre entre 1,0 et 5,0% en poids, valeurs limites incluses.

5. Procédé selon au moins l'une des revendications précédentes, **caractérisé en ce que** le produit de réaction d'anhydride d'acide phtalique et de diéthylènetriamine présente, à raison d'au moins 95% en poids, une grosseur de grain inférieure ou égale à 70 um, mesurée par diffraction laser selon la norme ISO 13320:2009.

6. Procédé selon au moins l'une des revendications précédentes, **caractérisé en ce que** la couche adhésive est autoadhésive.

7. Procédé selon au moins l'une des revendications précédentes, **caractérisé en ce que** le matériau support comprend un non-tissé de polyester.

8. Procédé selon au moins l'une des revendications précédentes, **caractérisé en ce que** la masse adhésive est enfoncée à raison de plus de 10% dans le support.

**9.** Procédé selon au moins l'une des revendications précédentes, **caractérisé en ce que** la couche adhésive fusible, thermiquement durcissable, de préférence autoadhésive est thermiquement durcissable à une température entre 60°C et 110°C.

**10.** Procédé selon au moins l'une des revendications précédentes, **caractérisé en ce que** l'énergie thermique est fournie sur une période de temps de 0,5 seconde à 10 minutes.

**11.** Procédé selon au moins l'une des revendications précédentes, **caractérisé en ce que** l'agencement, dans lequel le produit allongé, conjointement avec le ruban adhésif enveloppant, est amené est un plan de câblage.

**12.** Procédé selon au moins l'une des revendications précédentes, **caractérisé en ce que** le produit allongé consiste en des lignes ou des câblages.

**13.** Produit allongé gainé, tel qu'en particulier un câblage, obtenu selon au moins l'une des revendications précédentes.

**14.** Utilisation d'un produit allongé gainé selon la revendication 13 dans un véhicule.

**FIG.1**

31

33 {

32

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1848006 A2
- DE 102013213726 A1
- EP 2497805 A1
- WO 2015004190 A1
- US 20190228885 A1
- JP 2011204496 A
- EP 3499664 A1
- US 20150013874 A
- EP 0071212 B1
- EP 1448744 A1

**In der Beschreibung aufgeführte Nicht-Patentliteratur**

- *CHEMICAL ABSTRACTS,* 68891-46-3
- *CHEMICAL ABSTRACTS,* 25068-38-6
- *CHEMICAL ABSTRACTS,* 9003-36-5
- *CHEMICAL ABSTRACTS,* 68003-28-1
- Satas, Handbook of Pressure Sensitive Adhesive Technology. 1999, 153-203
- *CHEMICAL ABSTRACTS,* 9011-11-4
- Taschenbuch der Kunststoff-Additive. **GAECHTER ; MÜLLER.** Kirk-Othmer (3.). 1979, vol. 23, 615-627
- 14. *Encycl. Polym. Sci. Technol.,* 125-148